(19) Europäisches Patentamt
European Patent Office
Office européen des brevets

(11) **EP 1 648 101 B1**

(12) **EUROPÄISCHE PATENTSCHRIFT**

(45) Veröffentlichungstag und Bekanntmachung des Hinweises auf die Patenterteilung:
**18.06.2008   Patentblatt 2008/25**

(51) Int Cl.:
***H04B 10/158*** (2006.01)

(21) Anmeldenummer: **04024681.1**

(22) Anmeldetag: **15.10.2004**

(54) **Empfangsschaltung für eine optische Empfangseinrichtung**

Receiving circuit for an optical receiving apparatus

Circuit de réception pour un dispositif de réception optique

(84) Benannte Vertragsstaaten:
**DE FR GB**

(43) Veröffentlichungstag der Anmeldung:
**19.04.2006   Patentblatt 2006/16**

(73) Patentinhaber: **Avago Technologies Fiber IP (Singapore) Pte. Ltd.**
**Singapore 768923 (SG)**

(72) Erfinder:
• **Schrödinger, Karl**
**14089 Berlin (DE)**
• **Wittl, Josef**
**92331 Parsberg (DE)**
• **Lichtenegger, Tomas**
**93087 Alteglofsheim (DE)**

(74) Vertreter: **Dilg, Andreas**
**Dilg, Haeusler, Schindelmann**
**Patentanwaltsgesellschaft mbH**
**Nußbaumstraße 6**
**80336 München (DE)**

(56) Entgegenhaltungen:
EP-A- 0 565 116          EP-A- 1 261 152
DE-A1- 19 821 865        US-A- 5 410 145

## Beschreibung

Die Erfindung bezieht sich auf eine Empfangsschaltung für eine optische Empfangseinrichtung gemäß dem Oberbegriff des Anspruchs 1.

Bei Photodioden größeren Durchmessers von beispielsweise 1 mm und höheren Temperaturen von beispielsweise größer als 100°C, wie sie insbesondere bei Plastik-Faser-Systemen im Automobilbereich zur Anwendung kommen, können auftretende Dunkelströme erheblich ansteigen und eine Auswertung des Photodiodenstromes wegen der erforderlichen Genauigkeit unmöglich machen. Eine Auswertung des Photodiodenstromes erfolgt dabei beispielsweise zwecks eines Monitoring der optischen Leistung oder für eine Sleep-Mode-Steuerung.

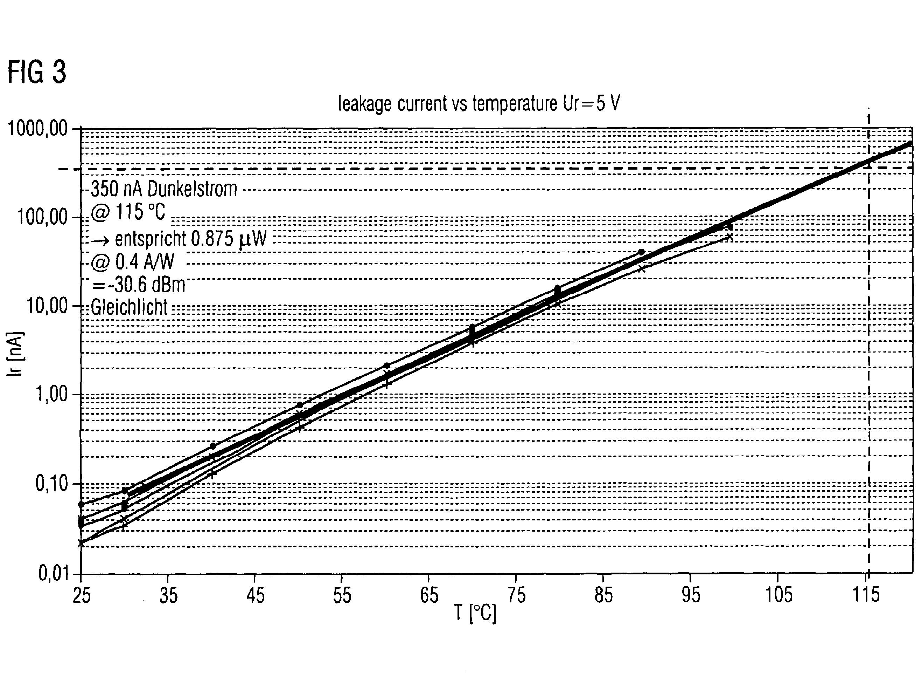

Die Figur 3 zeigt anhand einiger Beispiele die Dunkelströme von bekannten Photodioden größeren Durchmessers in Abhängigkeit von der Temperatur. Die Dunkelströme nehmen zu höheren Temperaturen hin exponentiell zu und können bei hohen Temperaturen wesentlich über den Strömen der minimalen regulären Eingangsleistungen des zu detektierenden Signals liegen.

Das Problem auftretender Dunkelströme kann hinsichtlich der Auswertung der in einem modulierten optischen Signal enthaltenen Daten beispielsweise durch Offset-Korrekturschaltungen reduziert werden. Der Rauscheinfluss des Dunkelstroms ist hinsichtlich einer Datenübertragung insofern vernachlässigbar.

Darüber hinaus ist aus dem Dokument EP-A-1 261 152 eine Empfangsschaltung beschrieben, die in der Nähe einer Empfänger-Fotodiode eine weitere, gegen Licht abgeschirmte Fotodiode aufweist. Das von beiden Fotodioden ausgehende Signal wird in einem Hysteresis-Komparator verarbeitet, wodurch das Gleichtaktrauschen vermindert wird.

Weiter ist aus dem Dokument DE 198 21 865 A1 eine Empfangsschaltung mit einer Fotodiode bekannt, die Mittel zum Auskoppeln eines Wechselanteils des von der Fotodiode erzeugten Fotostroms aufweist.

Erhebliche Probleme treten aber bei Anwendungen auf, die die empfangene Empfangsleistung auswerten, wie beispielsweise bei einem Monitoring der optischen Leistung oder bei einer Sleep-Mode-Steuerung.

Der vorliegenden Erfindung liegt dementsprechend die Aufgabe zugrunde, eine Empfangsschaltung für eine optische Empfangseinrichtung zur Verfügung zu stellen, die auch bei großen auftretenden Dunkelströmen eine sichere Auswertung des Photodiodenstromes ermöglicht und die in vereinfachter Weise hergestellt werden kann.

Diese Aufgabe wird erfindungsgemäß durch eine Empfangsschaltung für eine optische Empfangseinrichtung mit den Merkmalen des Patentanspruchs 1 gelöst. Vorteilhafte und bevorzugte Ausgestaltungen der Erfindung sind in Unteransprüchen angegeben.

Danach zeichnet sich die erfindungsgemäße Lösung durch den Gedanken aus, eine optische Empfangseinrichtung und zusätzlich ein die Empfangseinrichtung im beleuchtungsfreien Fall nachbildendes elektrisches Element vorzusehen, das von der optischen Empfangseinrichtung bereitgestellte Signale zu mitteln und die Differenz der beiden elektrischen Signale auszuwerten. Dabei wird die Differenz zwischen dem zeitlich gemittelten elektrischen Signal der optischen Empfangseinrichtung und des elektrischen Signals des elektrischen Elements erfasst. Das elektrische Element detektiert dabei insbesondere Dunkelströme und andere Störsignale, die sich dem von der optischen Empfangseinrichtung zu detektierenden Nutzsignal überlagern. Da das elektrische Element das elektrische Verhalten der ersten Empfangseinrichtung im beleuchtungsfreien Fall nachbildet, sind die Dunkelströme der beiden Komponenten im wesentlichen identisch und können subtrahiert werden, d. h. die Differenz der Mittelwerte der beiden Ausgangssignale von optischer Empfangseinrichtung und elektrischem Element ist auswertbar bzw. erfassbar und entspricht sehr genau der Eingangsleistung an der optischen Empfangseinrichtung.

Unter einem "beleuchtungsfreien Fall" wird dabei verstanden, dass sich das elektrische Element elektrisch weitestgehend genauso verhält wie die Empfangseinrichtung, wenn kein zu detektierendes Licht auf die Empfangseinrichtung auftrifft.

Erfindungsgemäß weisen die Mittel zum Erfassen der Differenz der beiden zeitlich gemittelten Signale Stromspiegel auf, die einen Störanteil des elektrischen Signals der optischen Empfangseinrichtung vom elektrischen Signal der optischen Empfangseinrichtung subtrahieren.

Besonders bevorzugt wird auch das elektrische Signal des elektrischen Elements gemittelt und die Differenz der beiden zeitlich gemittelten elektrischen Signale erfasst. Dieser symmetrische Aufbau der Empfangsschaltung hat den Vorteil, dass seitens der Versorgungsspannung die Störunterdrückung verbessert ist.

Bei dem das elektrische Verhalten der Empfangseinrichtung im beleuchtungsfreien Fall nachbildenden elektrischen Element kann es sich beispielsweise um eine mit der Empfangseinrichtung ("Nutz"-Empfangseinrichtung) der Empfängerschaltung identische Empfangseinrichtung ("Dummy-Empfangseinrichtung") handeln, die derart abgedunkelt ist, dass kein Licht darauf fallen kann. Die "Nutz"-Empfangseinrichtung und die "Dummy"-Empfangseinrichtung sind vorzugsweise auf einem Halbleiterchip gemeinsam monolithisch integriert, um sicher zu stellen, dass beide Empfangseinrichtungen ein annähernd gleiches elektrisches Verhalten aufweisen.

Alternativ kann das das elektrische Verhalten der Nutz-Empfangseinrichtung im beleuchtungsfreien Fall nachbildende elektrische Element auch durch eine Kapazität gebildet sein, die das kapazitive Verhalten der Nutz-Empfangseinrichtung nachbildet.

Bei der optischen Empfangseinrichtung handelt es sich bevorzugt um eine Photodiode, insbesondere eine Photodiode größeren Durchmessers von beispielsweise 1 mm, die bei höheren Temperaturen zur Anwendung kommt. Bei dem elektrischen Element handelt es sich bevorzugt ebenfalls um eine Photodiode, die zu der ersten Photodiode gleichartig ausgebildet ist. Die beiden Photodioden sind monolithisch auf einen Chip integriert. Aufgrund der Gleichartigkeit der beiden Photodioden und der monolithischen Integration kann man von weitgehend gleichen Dunkelströmen ausgehen, die durch die Subtraktion eliminiert werden. Der Fehler bei der Differenzauswertung liegt bei etwa 1 bis 5 % des absoluten Dunkelstroms.

Eine bevorzugte Anwendung der vorliegenden Erfindung liegt in der Auswertung der Eingangsleistung an der ersten Photodiode beispielsweise für ein Monitoring der optischen Leistung oder für eine Sleep-Mode-Steuerung. Durch die erfindungsgemäße Erfassung der Differenz der beiden zeitlich gemittelten Signale kann auch bei Photodioden großen Durchmessers und bei hohen Temperaturen, die sich durch hohe Dunkelströme ausweisen, eine sichere Auswertung der Eingangsleistung vorgenommen werden.

Bevorzugt ist eine Auswertschaltung vorgesehen, die das elektrische Signal der optischen Empfangseinrichtung und das elektrische Signal des elektrischen Elements erfasst und für eine weitere Auswertung aufbereitet.

In einer bevorzugten Ausgestaltung der Erfindung umfassen die Mittel zum Erfassen der Differenz der beiden zeitlich gemittelten Signale zusätzlich einen Differenzverstärker. Die durch die Auswertschaltung aufbereiteten elektrischen Signale der optischen Empfangseinrichtung und des elektrischen Elements werden dabei den beiden Eingängen des Differenzverstärkers zugeführt. Bevorzugt weist die mindestens eine Auswertschaltung dabei Widerstände auf, an denen jeweils eine Spannung abgegriffen und den beiden Eingängen des Differenzverstärkers zugeführt wird.

Die Erfindung wird nachfolgend unter Bezugnahme auf die Figuren anhand mehrerer Ausführungsbeispiele näher erläutert.
Es zeigen:

Fig. 1 eine optische Empfangsschaltung zur Erfassung und Aufbereitung eines optischen Nutzsignals hinsichtlich der in dem Nutzsignal enthaltenen Daten,

Fig. 2 eine Empfangsschaltung zur Erfassung des gemittelten Photostromsignals einer Photodiode,

Fig. 3 den Dunkelstrom einer Photodiode in Abhängigkeit von der Temperatur für mehrere Beispiele von Photodioden,

Fig. 4 ein Ausführungsbeispiel einer Auswerteschaltung, die den Photostrom bei einer Empfangsschaltung gemäß der Figur 2 für eine weitere Verarbeitung aufbereitet, und

Fig. 5 eine Empfangsschaltung zur Erfassung des gemittelten Photostromsignals einer Photodiode, die eine Stromspiegelschaltung umfasst.

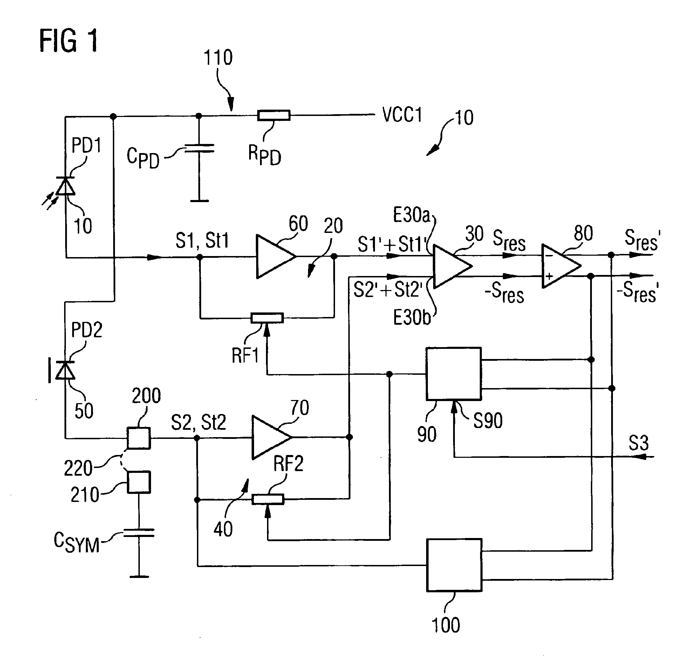

In der Figur 1 erkennt man eine Photodiode 10 als Empfangseinrichtung ("Nutz"-Empfangseinrichtung), die über einen Transimpedanzverstärker 20 an einen Anschluss E30a eines Differenzverstärkers 30 angeschlossen ist. Der andere Eingang E30b des Differenzverstärkers 30 ist über einen weiteren als Transimpedanzverstärker ausgeführten Vorverstärker 40 mit einer "Dummy"-Photodiode 50 als "Dummy"-verbunden, die das elektrische Verhalten der Empfangseinrichtung 10 im beleuchtungsfreien Fall elektrisch nachbildet.

Der Transimpedanzverstärker 20 ist durch einen Spannungsverstärker 60, beispielsweise einen Operationsverstärker, gebildet, der mit einem Rückkoppelwiderstand RF1 beschaltet ist. In entsprechender Weise ist der weitere Transimpedanzverstärker 40 durch einen Spannungsverstärker, beispielsweise einen mit dem Operationsverstärker 60 identischen Operationsverstärker 70, gebildet, der mit einem weiteren Rückkoppelwiderstand RF2 (RF1 = RF2) beschaltet ist.

Der Differenzverstärker 30 ist ausgangsseitig mit einem zweiten Differenzverstärker 80 verbunden, der das Ausgangssignal des ersten Differenzverstärkers 30 weiter verstärkt und an seinem Ausgang ein dem optischen Signal der Photodiode 10 entsprechendes Ausgangssignal $S_{res}$' bzw. das dazu invertierte Signal $-S_{res}$' erzeugt.

Ausgangsseitig ist der Differenzverstärker 80 mit einer AGC (Amplitude Gain Control) Regelschaltung 90 verbunden, die ausgangsseitig mit den beiden Rückkoppelwiderständen RF1 und RF2 in Verbindung steht. Die Regelschaltung 90 stellt den Widerstandswert RF1 und RF2 in Abhängigkeit von einem an einem Steuereingang S90 der Regelschaltung 90 anliegenden Steuersignal S3 ein. Über diesen Steuereingang S90 kann die Verstärkung der beiden Transimpedanzverstärker 20 und 40 benutzerseitig von außen eingestellt werden. Da die erreichbare Verstärkung V und die Bandbreite B der Schaltung näherungsweise miteinander in Beziehung stehen (V*B = constant), kann über ein Verändern der Verstärkung auch die erreichbare Bandbreite benutzerseitig eingestellt werden. Alternativ oder zusätzlich kann die Regelschaltung 90 auch zusätzliche Kapazitäten (oder Induktivitäten) parallel oder in Reihe zu den beiden Rückkoppelwiderständen RF1 und RF2 schalten, um das Rückkoppelverhalten zu modifizieren und um beispielsweise das Auftreten von elektrischen Schwingungen zu vermeiden. Darüber hinaus ist die Regelschaltung 90 mit den Ausgangssignalen Sres' und -Sres' des zweiten Verstärkers 80 beaufschlagt, so dass die Regelschaltung beispielsweise ein Übersteuern des Verstärkers verhindern kann.

Darüber hinaus ist die optische Empfängerschaltung mit einer DCC-Schaltung 100 (DCC: Duty Cycle Control) ausgestattet, die eine Regelung der optischen Empfängerschaltung bewirkt. Die DCC-Schaltung 100 bzw. die durch sie gebildete Duty-Cycle-Regelung (Offset Regelung) regelt die Abtast-Schwelle für die nachfolgenden Differenzverstärker, so dass das Signal beim 50% Wert der Amplitude abgetastet wird und sich damit keine Signalpulsverzerrungen (duty cycle) ergeben. Dies kann durch Einspeisen eines Stromes in jeweils einen der Vorverstärker (Transimpedanzverstärker) erfolgen oder auch durch Einspeisen einer Spannung an den Eingängen der Differenzverstärker direkt.

Wie sich der Figur 1 darüber hinaus entnehmen lässt, sind die beiden Photodioden 10 und 50 beide jeweils an eine Versorgungsspannung VCC1 angeschlossen, die mit einem Tiefpass 110 - bestehend aus einer Kapazität $C_{PD}$ und einem Widerstand $R_{PD}$ - verbunden ist.

Die optische Empfängerschaltung wird wie folgt betrieben:

Im Falle einer Lichteinstrahlung auf die Photodiode 10 wird ein elektrisches Signal S1 in den Transimpedanzverstärker 20 eingespeist und von diesem verstärkt. Am Ausgang des Transimpedanzverstärkers 20 wird somit das verstärkte Signal S1' gebildet, das zu dem Eingang E30a des Differenzverstärkers 30 gelangt.

Störsignale St1, die in die Photodiode 10 bzw. in die Zuleitungen der Photodiode 10 eingekoppelt bzw. eingespeist werden, werden von dem Transimpedanzverstärker 20 ebenfalls verstärkt und als verstärkte Störsignale St1' zum Differenzverstärker 30 übertragen.

Die Dummy-Photodiode 50 ist - wie dies der senkrechte Balken in der Figur 1 andeutet - derart abgedunkelt, dass kein Licht auf die Dummy-Photodiode 50 fallen kann. Die Photodiode 50 ist somit optisch inaktiv und hat lediglich die Funktion eines "Dummys".

Trotz allem können in die "Dummy"-Photodiode 50 Störsignale ST2 eingekoppelt werden, beispielsweise über die Zuleitungen der Photodiode 50. Diese Störsignale ST2 werden von dem weiteren Transimpedanzverstärker 40 verstärkt und gelangen als verstärkte Störsignale ST2' zu dem weiteren Eingang E30b des Differenzverstärkers 30. Am Ausgang des Differenzverstärkers 30 werden somit Ausgangssignale $S_{res}$ - und die dazu invertierten Signale $-S_{res}$ - gebildet gemäß

$$S_{res}=S1+St1-(S2+St2).$$

Da die "Dummy-Photodiode 50 abgedunkelt ist und damit kein eigenes Nutzsignal S2 erzeugen kann, gilt:

$$S2=0$$

Darüber hinaus ist anzunehmen, dass Störsignale, die in die Photodiode 10 eingekoppelt werden, gleichzeitig auch in die "Dummy"-Photodiode 50 eingekoppelt werden, so dass folgende Annahme gerechtfertigt ist:

$$St1=St2.$$

Somit ergibt sich am Ausgang des Differenzverstärkers 30 insgesamt ein Ausgangssignal gemäß

$$S_{res} = S1,$$

weil nämlich St1=St2 und S2=0.

Zusammengefasst lässt sich damit feststellen, dass durch die Verwendung zweier gleichartiger Eingangszweige - gebildet durch die Photodiode 10 und durch die "Dummy"-Photodiode 50 - die Empfängerschaltung sehr störunanfällig ist, da die eingangsseitig von den beiden Photodioden 10 und 50 "mitgelieferten" Störsignale St1 und St2 aufgrund der Gleichtaktunterdrückung des Differenzverstärkers 30 weitgehend eliminiert werden.

Der Tiefpass 110 an der Stromversorgungsspannung VCC1 dient im Übrigen dazu, hochfrequente Störungen der Spannungsversorgung VCC1 herauszufiltern, so dass höherfrequente Störungen zusätzlich unterdrückt werden, da üblicherweise die Common Mode Störunterdrückun zu hohen Frequenzen abnimmt.

In der Figur 1 sind darüber hinaus Anschlusspads 200 und 210 erkennbar, die mittels eines Bonddrahtes 220 miteinander verbunden werden können. Durch einen solchen Bonddraht 220 lässt sich die Kapazität $C_{SYM}$ an den weiteren Transimpedanzverstärker 40 anschließen. Die Kapazität $C_{SYM}$ kann dabei die "Dummy"-Photodiode 50 ersetzen, wenn eine solche Photodiode 50 nicht zur Verfügung steht. Die Kapazität $C_{SYM}$ ist dann vorzugsweise derart bemessen, dass sie im Wesentlichen der Kapazität der "fehlenden" Dummy-Photodiode 50 bzw. der Kapazität der Nutzdiode 10 entspricht.

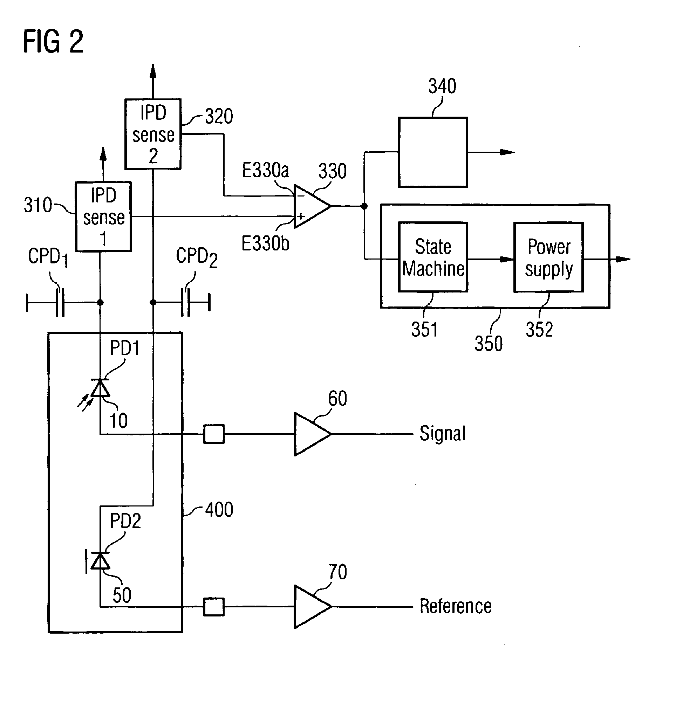

Während die in der Figur 1 beschriebene optische Empfangsschaltung die Aufbereitung eines empfangenen Signals hinsichtlich der in dem Signal enthaltenen Daten betrifft, wertet die in der Figur 2 dargestellte Anordnung das von den beiden Photodioden 10, 50 abgegebene Signal hinsichtlich der Eingangsleistung aus. Dabei sind die Anodenanschlüsse der zwei Photodioden 10, 50 entsprechend der in der Figur 1 dargestellten Empfangsschaltung jeweils mit einem Transimpedanzverstärker 60, 70 verbunden, wobei der Ausgang des einen Transimpedanzverstärkers 60 das eigentliche Nutzsignal und der Ausgang des anderen Transimpedanzverstärkers 70 ein Referenzsignal bereitstellt. Dieser im weiteren nicht dargestellte Schaltungsteil kann beispielsweise entsprechend der Figur 1 ausgestaltet sein. Es können sich aber auch andere Empfangsschaltungen anschließen. Auch ist grundsätzlich denkbar, das an den Anodenanschlüssen der Photodioden 10, 50 anliegende Signal überhaupt nicht auszuwerten.

Die beiden Photodioden 10 sind auf einem gemeinsamen Chip 400 integriert.

Die Kathodenanschlüsse der Photodioden 10, 20 sind jeweils mit dem einen Anschluss einer Kapazität $C_{PD1}$, $C_{PD2}$ verbunden, deren anderer Anschluss mit einem Bezugspotential wie Masse verbunden ist. Die Kathodenanschlüsse sind des Weiteren über Auswerteschaltungen 310, 320 mit den beiden Eingängen E330a, E330b eines Differenzverstärkers 330 verbunden. Der Ausgang des Differenzverstärkers 330 ist mit schematisch dargestellten Auswerteeinheiten 340, 350 verbunden, bei denen es sich beispielsweise um eine Einheit 340 zum Monotoring der optischen Leistung und/oder eine Sleep-Mode-Steuerung 350 handelt. Letztere umfasst eine Vorrichtung 351, die in Abhängigkeit von dem Vorliegen eines Eingangssignals einen "Schlafzustand" oder einen "Wachzustand" ausgibt, sowie eine Stromversorgung 352, die in Abhängigkeit von dem Ausgabezustand der Vorrichtung 351 die Stromversorgung entsprechend einem normalen Modus oder entsprechend einem Schlafmodus bereitstellt. Bei Detektion eines optischen Signals durch die Photodiode 10 wird der "Schlafzustand" beendet.

Die Funktionsweise der Schaltung ist wie folgt. Das Ausgangssignal der nicht abgedeckten Photodiode 10 wird von der Kapazität $C_{PD1}$, die als Integrator wirkt, gemittelt. Die Kapazität $C_{PD1}$ wird dabei von den in ihrer Intensität schwankenden Photostromsignalen der Photodiode 10 aufgeladen und entladen und stellt sich dabei auf einen Mittelwert ein, um den es höchstens geringfügig schwankt.

Die Auswerteschaltung 310 bereitet das gemittelte Photostromsignal mit einer entsprechenden Dynamik so auf, dass es dem nichtinvertierenden Eingang E330b des Differenzverstärkers 230 zugeführt wird.

Das Ausgangssignal der abgedeckten, nicht beleuchteten, gegenüber der Photodiode 10 gleichartigen Photodiode 50 wird mittels der Kapazität $C_{PD2}$ gemittelt (sofern es nicht ohnehin konstant ist) und der zweiten Auswerteschaltung 320 zugeführt. Diese bereitet dieses Signal mit der entsprechenden Dynamik auf, so dass es dem invertierenden Eingang E330a des Differenzverstärkers zuführbar ist.

Der Differenzverstärker 330 subtrahiert im Ergebnis den Dunkelstrom der abgedeckten Photodiode 50 von dem Signal der aktiven Photodiode 10. Auf diese Weise können die Dunkelströme eliminiert werden. Diese können bei hohen Temperaturen und großen Photodiodenflächen bei Werten von bis zu 1 μA liegen, während die auszuwertenden Ströme bei nur 0,1 pA liegen.

Es wird darauf hingewiesen, dass die in der Figur 2 beschriebene Schaltung mit den Auswertschaltungen 310, 320 und dem Differenzverstärker 330 grundsätzlich auch an den Anodenanschlüssen der Photodioden 10, 50 realisiert werden kann. Ebenso kann die Anordnung der Figur 1 ebenso auch an den Kathodenanschlüssen der Photodioden 10, 50 erfolgen. Damit verbundene geringfügige Adaptionen der Schaltungen sind dem Fachmann geläufig.

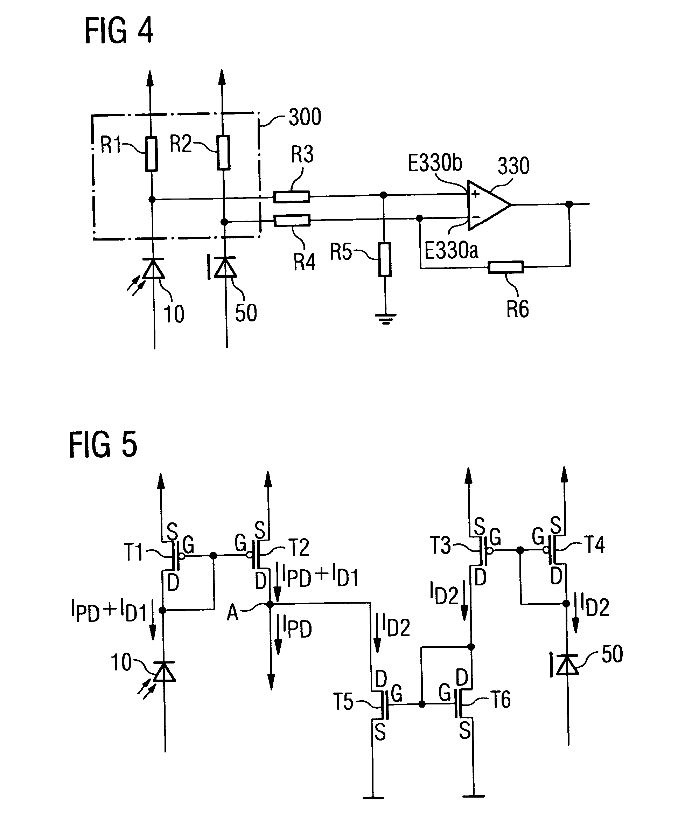

Die Figuren 4 und 5 zeigen Ausführungsbeispiele für die Ausbildung der Auswerteschaltungen 310, 320. Allgemein können die Auswertschaltungen 310, 320 insbesondere mit Stromspiegeln realisiert werden oder mittels Widerständen, an denen eine Spannung abgegriffen wird.

Gemäß der Figur 4 sind die beiden Schaltungen 310, 320 der Figur 2 in eine gemeinsame Schaltung 300 integriert, die zwei Widerstände R1, R2 aufweist, an denen jeweils eine Spannung abgegriffen wird. Die abgegriffene Spannung wird an eine an sich bekannte Subtraktionsschaltung mit Widerständen R3, R4, R5, R6 und einem Differenzverstärker 330 zugeführt. Es wird nur die Differenz der Eingangsspannungen am invertierenden Eingang E330a und am nichtinvertierenden Eingang E330b verstärkt.

Bei dem Ausführungsbeispiel der Figur 5 erfolgt eine Substraktion der gemittelten Photodiodenströme der Photodioden 10, 50 mittels einer Stromspiegelschaltung, ohne dass ein Differenzverstärker erforderlich ist. Dies wird durch eine Kette mehrerer Stromspiegel erreicht. Ein erster Stromspiegel wird durch p-Kanal Transistoren T1, T2 bereitgestellt, ein zweiter Stromspiegel durch P-Kanal Transistoren T3, T4 und ein dritter Stromspiegel durch n-Kanal Transistoren T5, T6.

Der Gate-Anschluss und der Drain-Anschluss des Transistors T1 ist mit dem Kathodenanschluss der beleuchteten Photodiode 10 verbunden (der integrierende Kondensator ist in den Figuren 4 und 5 der besseren Übersichtlichkeit halber nicht gesondert dargestellt). Der Source-Anschluss des Transistors T1 ist - gegebenenfalls über einen Widerstand - mit einer Versorgungsspannung verbunden. Die Gate-Anschlüsse der Transistoren T1 und T2 sind miteinander verbunden. Der Source-Anschluss des Transistors T2 ist - gegebenenfalls ebenfalls über einen Widerstand - ebenfalls mit der Versorgungsspannung verbunden.

Die Funktionsweise des Stromspiegels ist wie folgt. Der durch die Photodiode 10 erzeugte Strom $I_{PD1}$ stellt einen Referenzstrom des Stromspiegels dar, der durch den Transistor T1 fließt. Dieser Referenzstrom $I_{PD1}$ besteht aus zwei Komponenten $I_{PD}$ und $I_{D1}$, nämlich dem eigentlichen zu detektierenden Photodiodenstrom $I_{PD}$ und dem an der Photodiode 10 anliegenden Dunkelstrom $I_{D1}$. Der Stromspiegel erzeugt nun einen Steuerstrom, der in einem bestimmten Verhältnis zum Referenzstrom steht und der durch den Transistor T2 fließt. Die Einstellung ist dabei derart, dass der Referenzstrom durch die Photodiode 10 identisch auf den Transistor T2 gespiegelt wird, durch diesen fließt und am Drain-Anschluss ausgegeben wird.

In gleicher Weise wird der Photodiodenstrom $I_{PD2}$ der abgedeckten Photodiode 50, der allein aus dem Dunkelstrom $I_{D2}$ dieser Photodiode besteht, über die in gleicher Weise aufgebaute Spiegelschaltung T4, T3 auf den Drain-Anschluss des Transistors T3 gespiegelt. Der durch den Transistor T3 fließende Strom ID2 stellt nun wiederum den Referenzstrom des weiteren Stromspiegels bestehend aus den Transistoren T6, T5 dar und wird dementsprechend auf den Strom durch den Transistor T5 gespiegelt.

Da der Drain-Anschluss des Transistors T5 und der Drain-Anschluss des Transistors T2 miteinander verbunden sind, fließt von dem Transistor T2 zu dem Transistor T5 exakt der Photodiodenstrom $I_{D1}$, jedenfalls wenn dieser identisch ist mit dem Photodiodenstrom $I_{D2}$, was wie erläutert bis auf geringfügige Fehler der Fall ist. Dies bedeutet aber, dass an dem Ausgang A der Schaltung der Figur 5 gerade das zu detektierende Photostromsignal $I_{PD}$ anliegt und einer weiteren Auswertung zugeführt werden kann.

Alternativ können die Kapazitäten $C_{PD1}$ und $C_{PD2}$ bei der Ausführungsform der Figur 4 parallel zu den Widerständen R5 und R6 ausgebildet sein. Eine weitere Alternative besteht darin, eine Kapazität am Knoten A der Figur 5 auszubilden.

## Patentansprüche

1. Empfangsschaltung für eine optische Empfangseinrichtung mit

   - einer optischen Empfangseinrichtung (10), die ein optisches Signal in ein elektrisches Signal wandelt,
   - einem das elektrische Verhalten der Empfangseinrichtung (10) im beleuchtungsfreien Fall nachbildenden elektrischen Element (50),

   **gekennzeichnet durch**

   - eine erste Schaltungseinrichtung ($C_{PD1}$), die das elektrische Signal der optischen Empfangseinrichtung (10) mittelt, und
   - Mittel (330; T1-T6) zum Erfassen der Differenz zwischen dem zeitlich gemittelten elektrischen Signal der optischen Empfangseinrichtung (10) und dem elektrischen Signal des elektrischen Elements (50), wobei
   - diese Mittel (330; T1-T6) Stromspiegel (T1, T2; T3, T4; T5; T6) aufweisen, die einen Störanteil des elektrischen Signals der optischen Empfangseinrichtung (10) vom elektrische Signal der optischen Empfangseinrichtung (10) subtrahieren.

2. Empfangsschaltung nach Anspruch 1 **dadurch gekennzeichnet, dass** das elektrische Element (50) durch eine weitere, abgedunkelte Empfangseinrichtung gebildet ist.

3. Empfangsschaltung nach Anspruch 2, **dadurch gekennzeichnet, dass** die Empfangseinrichtung (10) und die weitere Empfangseinrichtung (50) auf einem Chip monolithisch integriert sind.

4. Empfangsschaltung nach Anspruch 2 oder 3, **dadurch gekennzeichnet, dass** die beiden Empfangseinrichtungen (10, 50) Photodioden sind.

5. Empfangsschaltung nach einem der vorangehenden Ansprüche, **gekennzeichnet durch** mindestens eine Auswertschaltung (300, 310, 320), die das elektrische Signal der optischen Empfangseinrichtung (10) und das elektrische Signal des elektrischen Elements (50) erfasst und für eine weitere Auswertung aufbereitet.

6. Empfangsschaltung nach einem der vorangehenden Ansprüche, **dadurch gekennzeichnet, dass** die Mittel zum Erfassen der Differenz der beiden elektrischen Signale zusätzlich einen Differenzverstärker (330) umfassen.

7. Empfangsschaltung nach den Ansprüchen 5 und 6, **dadurch gekennzeichnet , dass** die aufbereiteten elektrischen Signale der optischen Empfangseinrichtung (10) und des elektrischen Elements (50) den beiden Eingängen (E330a, E330b) des Differenzverstärkers (330) zugeführt werden.

8. Empfangsschaltung nach Anspruch 7, **dadurch gekennzeichnet, dass** die mindestens eine Auswertschaltung (300) Widerstände (R1, R2) aufweist, an denen jeweils eine Spannung abgegriffen und den beiden Eingängen (E330a, E330b) des Differenzverstärkers (330) zugeführt wird.

9. Empfangsschaltung nach einem der vorangehenden Ansprüche, **dadurch gekennzeichnet, dass** die Mittel (330; T1-T6) zum Erfassen der Differenz der beiden elektrischen Signale mit einer Sleep-Mode-Steuerung (350) verbunden sind.

10. Empfangsschaltung nach einem der vorangehenden Ansprüche, **dadurch gekennzeichnet, dass** die Mittel (330; T1-T6) zum Erfassen der Differenz der beiden elektrischen Signale mit einer Monitoreinrichtung (340) zur Überwachung der von der Empfangseinrichtung (10) empfangenen optischen Leistung verbunden sind.

11. Empfangsschaltung nach einem der vorangehenden Ansprüche, **gekennzeichnet durch** eine zweite Schaltungseinrichtung (C$_{PD2}$), die das elektrische Signal des elektrischen Elements (50) mittelt, wobei die Mittel (330; T1-T6) zum Erfassen der Differenz die Differenz der beiden zeitlich gemittelten elektrischen Signale erfassen.

12. Empfangsschaltung nach einem der vorangehenden Ansprüche, **dadurch gekennzeichnet , dass** die erste Schaltungseinrichtung (C$_{PD1}$) durch eine Kapazität gebildet ist.

13. Empfangsschaltung nach einem der vorangehenden Ansprüche, **dadurch gekennzeichnet , dass** die zweite Schaltungseinrichtung (C$_{PD2}$) durch eine Kapazität gebildet ist.

## Claims

1. A receiver circuit for an optical receiver device comprising:

   - an optical receiver device (10), which converts an optical signal into an electrical signal,
   - an electrical element (50) simulating the electrical behaviour of the receiver device (10) in the case in which there is no illumination,

   **characterised by**
   a first circuit device (C$_{PD1}$), which averages the electrical signal of the optical receiver device (10), and

   - means (330; T1-T6) for sensing the difference between the timewise-averaged electrical signal of the optical receiver device (10) and the electrical signal of the electrical element (50), wherein
   - these means (330; T1-T6) comprise current mirrors (T1, T2; T3, T4; T5; T6), which subtract an interfering component of the electrical signal of the optical receiver device (10) from the electrical signal of the optical receiver device (10).

2. The receiver circuit according to Claim 1, **characterised in that** the electrical element (50) is formed by another shaded receiver device.

3. The receiver circuit according to Claim 2, **characterised in that** the receiver device (10) and the other receiver device (50) are monolithically integrated on a chip.

4. The receiver circuit according to Claim 2 or 3, **characterised in that** the two receiver devices (10, 50) are photodiodes.

5. The receiver circuit according to one of the previous claims,
**characterised by** at least one evaluation circuit (300, 310, 320), which senses the electrical signal of the optical receiver device (10) and the electrical signal of the electrical element (50) and processes these for further evaluation.

6. The receiver circuit according to one of the previous claims,
**characterised in that** the means for sensing the difference between the two electrical signals additionally comprise a differential amplifier (330).

7. The receiver circuit according to the Claims 5 and 6, **characterised in that** the processed electrical signals of the optical receiver device (10) and the electrical element (50) are supplied to the two inputs (E330a, E330b) of the differential amplifier (330).

8. The receiver circuit according to Claim 7, **characterised in that** the at least one evaluation circuit (300) comprises resistances (R1, R2), at each of which a voltage is tapped off and supplied to the two inputs (E330a, E330b) of the differential amplifier (330).

9. The receiver circuit according to one of the previous claims,
**characterised in that** the means (330; T1-T6) for sensing the difference between the two electrical signals are connected with a sleep mode controller (350).

10. The receiver circuit according to one of the previous claims,
**characterised in that** the means (330; T1-T6) for sensing the difference between the two electrical signals are connected with a monitoring device (340) for monitoring the optical power received from the receiver device (10).

11. The receiver circuit according to one of the previous claims,
**characterised by** a second circuit device (C$_{PD2}$), which averages the electrical signal of the electrical element (50), wherein
the means (330; T1-T6) for sensing the difference sense the difference between the two timewise-averaged electrical signals.

12. The receiver circuit according to one of the previous claims,
**characterised in that** the first circuit device (C$_{PD1}$) is formed by a capacity.

13. The receiver circuit according to one of the previous claims,
**characterised in that** the second circuit device (C$_{PD2}$) is formed by a capacity.

## Revendications

1. Circuit de réception pour un dispositif de réception (95) optique avec

   - un dispositif (10) de réception optique, qui transforme un signal optique en un signal électrique,
   - un élément (50) électrique imitant le comportement électrique d'un dispositif (10) de réception dans un cas sans éclairage,

   **caractérisé par**

   - un premier système ($C_{PD1}$) à circuit, qui fournit le signal électrique au dispositif (10) de réception optique, et
   - des moyens (330 ; T1 à T6) pour détecter la différence entre le signal électrique fourni dans le temps et le signal électrique de l'élément (50) électrique,
   - ces moyens (330, T1 à T6) présentant des miroirs (T1, T2, T3, T4, T5, T6) de courant, qui soustraient une composante perturbatrice du signal électrique du dispositif de réception optique (10) à partir du signal électrique du dispositif de réception optique (10).

2. Circuit de réception selon la revendication 1, **caractérisé en ce que** l'élément (50) électrique est formé par un autre dispositif de réception foncé.

3. Circuit de réception selon la revendication 2, **caractérisé en ce que** le dispositif (10) de réception et l'autre dispositif (50) de réception sont intégrés de manière monolithique sur une puce.

4. Circuit de réception selon la revendication 2 ou 3, **caractérisé en ce que** les deux dispositifs (10, 50) sont des photodiodes.

5. Circuit de réception selon l'une quelconque des revendications précédentes, **caractérisé par** au moins un circuit (300, 310, 320) d'interprétation, qui détecte le signal électrique du dispositif (10) de réception et le signal électrique de l'élément (50) électrique et traite une autre interprétation.

6. Circuit de réception selon l'une quelconque des revendications précédentes, **caractérisé en ce que** les moyens de détection de la différence des deux signaux électriques comprennent en plus un amplificateur (330) différentiel.

7. Circuit de réception selon les revendications 5 et 6, **caractérisé en ce que** les signaux électriques traités du dispositif (10) de réception optique et de l'élément (50) électrique sont acheminés dans les deux entrées (E330a, E330b) de l'amplificateur (330) différentiel.

8. Circuit de réception selon la revendication 7, **caractérisé en ce qu'**au moins le parmi un circuit (300) d'interprétation présente des résistances (R1, R2), au niveau de chacune desquelles est prélevée une tension qui est amenée aux deux entrées (E330a, E330b) de l'amplificateur (330) différentiel.

9. Circuit de réception selon l'une quelconque des revendications précédentes, **caractérisé en ce que** les moyens (330, T1 à T6) de détection de la différence des deux signaux électriques sont reliés à une commande (350) de mode veille.

10. Circuit de réception selon l'une quelconque des revendications précédentes, **caractérisé en ce que** les moyens (330, T1 à T6) de détection de la différence des deux signaux électriques sont reliés à un dispositif (340) de contrôle afin de contrôler la puissance optique reçue par le dispositif (10) de réception.

11. Circuit de réception selon l'une quelconque des revendications précédentes, **caractérisé en ce qu'**un second système ($C_{PD2}$) à circuit fournit le signal électrique de l'élément (50) électrique, les moyens (330, T1 à T6) de détection de différence détectant la différence des deux signaux électriques fournis dans le temps.

12. Circuit de réception selon l'une des revendications précédentes, **caractérisé en ce que** le premier système ($C_{PD1}$) à circuit est formé par une capacitance.

13. Circuit de réception selon l'une des revendications précédentes, **caractérisé en ce que** le second système ($C_{PD2}$) à circuit est formé par une capacitance.

## FIG 1

# FIG 2

## FIG 3

leakage current vs temperature Ur=5 V

350 nA Dunkelstrom
@ 115 °C
→ entspricht 0.875 μW
@ 0.4 A/W
=-30.6 dBm
Gleichlicht

Ir [nA]

T [°C]

EP 1 648 101 B1

EP 1 648 101 B1

## FIG 4

## FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1261152 A
- DE 19821865 A1